## Europäisches Patentamt

## European Patent Office

## Office européen des brevets

(19)

(11) Veröffentlichungsnummer : **0 016 319**
**B1**

(12)

# EUROPÄISCHE PATENTSCHRIFT

(45) Veröffentlichungstag der Patentschrift :
26.01.83

(21) Anmeldenummer : **80100487.0**

(22) Anmeldetag : **31.01.80**

(51) Int. Cl.³ : **A 01 N 59/00** // (A01N59/00, 47/44, 31/16, 31/02)

(54) Desinfektionsmittel auf Basis von Alkoholen und seine Verwendung zur Hautdesinfektion.

(30) Priorität : **05.02.79 DE 2904217**

(43) Veröffentlichungstag der Anmeldung :
**01.10.80 Patentblatt 80/20**

(45) Bekanntmachung des Hinweises auf die Patenterteilung : **26.01.83 Patentblatt 83/04**

(84) Benannte Vertragsstaaten :
**AT BE CH DE FR GB IT NL SE**

(56) Entgegenhaltungen :
**FR A 2 196 816**
**FR A 2 227 014**
**FR M 1 447**
**GB A 545 288**
**US A 3 954 974**

(73) Patentinhaber : **Henkel Kommanditgesellschaft auf Aktien**
**Postfach 1100 Henkelstrasse 67**
**D-4000 Düsseldorf 1 (DE)**

(72) Erfinder : **Bansemir, Klaus, Dr.**
**Ursulaweg 51**
**D-4018 Langenfeld (DE)**
Erfinder : **Disch, Karlheinz, Dr.**
**Holbeinstrasse 10**
**D-5657 Haan (DE)**

**Desinfektionsmittel auf Basis von Alkoholen und seine Verwendung zur Hautdesinfektion**

Die Erfindung betrifft ein sporenfreies Desinfektionsmittel auf Basis von Alkoholen und seine Verwendung zur Hautdesinfektion, insbesondere zur Händedesinfektion.

Aus der GB-A 545 288 ist ein Verfahren zur Sterilisierung von chirurgischem Nahtmaterial bekannt, bei dem man das zu behandelnde Gut mit 2 bis 5 prozentigen Lösungen von Wasserstoffperoxid in 70 bis 100 prozentigem Alkohol behandelt. Nach den Ausführungen der Beschreibung erfordert das Verfahren sehr lange Behandlungszeiten, beispielsweise 3 Tage, um eine vollkommene Sterilisation zu erreichen.

Die US-A 3 954 974 beschreibt ein Hautdesinfektionsmittel auf Basis einer wässrigen Wasserstoffperoxidlösung. Das Mittel liegt als Öl-in-Wasser-Emulsion vor, wobei die ölige Phase notwendig ist, um das Wasserstoffperoxid zu stabilisieren. In der kontinuierlichen Phase kann Wasser teilweise durch Alkohole wie Methanol, Ethanol, Glycol oder Glycerin ersetzt werden.

Die Verwendung von Mitteln auf Basis von Alkoholen wie Ethanol, n-Propanol und Isopropanol zur Desinfektion der Haut ist seit langem bekannt. Mit derartigen Mitteln können bei kurzen Einwirkungszeiten in der Größenordnung von 30 bis 60 Sekunden Keimzahlreduktionen bis zu 99,9 % erzielt werden. Es hat sich jedoch gezeigt, daß die alkoholischen Desinfektionsmittel Sporen von Bacillus- und Clostridienarten nicht abzutöten vermögen. In der Praxis kann die Möglichkeit nicht ausgeschlossen werden, daß Keimsporen in die alkoholischen Desinfektionsmittel gelangen, beispielsweise beim kurzzeitigen Öffnen der Aufbewahrungsgefäße oder beim Abfülle der Mittel in Behälter, die bereits Sporen enthalten. Aus diesem Grund besteht bei der Verwendung von alkoholischen Hautdesinfektionsmitteln stets ein gewissen Risiko einer durch Sporen verursachten Infektion.

Der vorliegenden Erfindung lag demnach die Aufgabe zugrunde, ein Desinfektionsmittel auf Basis von Alkoholen für die Verwendung zur Hautdesinfektion, insbesondere zur Händedesinfektion zu schaffen, das frei von Sporen ist und eingebrachte Sporen abzutöten vermag. Diese Aufgabe wird durch das nachstehend beschriebene Mittel gelöst.

Gegenstand der Erfindung ist ein Desinfektionsmittel auf Basis von Ethanol, n-Propanol und/oder Isopropanol, gekennzeichnet durch einen Gehalt von 0,05 bis 1, insbesondere von 0,1 bis 0,4 Gewichtsprozent, bezogen auf das gesamte Desinfektionsmittel, an Wasserstoffperoxid, berechnet als wasserfreie Substanz.

Gegenstand der Erfindung ist weiterhin die Verwendung des oben beschriebenen Mittels zur Haut- und Händedesinfektion.

Das erfindungsgemäße Desinfektionsmittel kann die Alkohole Ethanol, n-Propanol und Isopropanol einzeln, als Zweier- oder als Dreierkombination enthalten. In den Kombinationen sind praktisch alle Mengenverhältnisse möglich. Zur Herstellung des Desinfektionsmittels werden die genannten Alkohole als solche oder deren Mischungen mit Wasser eingesetzt. Die Gesamtalkoholkonzentration beträgt mindestens 30 Gewichtsprozent, vorzugsweise mindestens 50 Gewichtsprozent.

Wasserstoffperoxid wird dem erfindungsgemäßen Desinfektionsmittel zweckmäßigerweise in Form von handelsüblichen, mehr oder weniger konzentrierten wässrigen Lösungen zugegeben.

Eine bevorzugte Ausführungsform des erfindungsgemäßen Haut- und Händedesinfektionsmittels stellt die folgende Zusammensetzung dar :

40 - 50 Gew.-% Ethanol
20 - 30 Gew.-% Isopropanol
0,15 - 0,2 Gew.-% Wasserstoffperoxid
Rest Wasser

Neben den genannten Bestandteilen kann das erfindungsgemäße Desinfektionsmittel weitere für die Hautdesinfektion geeignete Wirkstoffe enthalten. Beispielsweise hat es sich als zweckmäßig erwiesen, dem erfindungsgemäßen Mittel 0,5 bis 1,5 Gewichtsprozent, bezogen auf das gesamte Desinfektionsmittel, 2,4,4'-Trichlor-2'-hydroxydiphenylether oder 1,1'-Hexamethylenbis-[5-(4-chlorphenyl)-biguanid]-glukonat zuzusetzen, wenn es zur Händedesinfektion vor dem Tragen von Operationshandschuhen eingesetzt werden soll. Durch den Zusatz von 2,4,4'-Trichlor-2'-hydroxydiphenylether wird die Vermehrung von Restkeimen nach der Anwendung des Desinfektionsmittels und unter den Bedingungen des Arbeitens mit Operationshandschuben über eine ausreichende Zeitspanne gehemmt.

Das erfindungsgemäße Desinfektionsmittel ist in der Lage, eingebrachte Keimsporen in kurzer Zeit abzutöten. Die sporicide Wirkung bleibt bei der Lagerung des Mittels praktisch unverändert erhalten. Überraschenderweise hat sich nämlich gezeigt, daß der Wasserstoffperoxidgehalt der alkoholischen Lösungen auch dann praktisch nicht abnimmt, wenn sie bei 40 °C über einen Zeitraum von 12 Monaten gelagert werden.

Die Bestandteile der erfindungsgemäßen Desinfektionsmittels sind bekannte, handelsübliche Substanzen. Das Mittel kann durch einfaches Vermischen der Bestandteile hergestellt werden.

Bei der Anwendung werden die zu desinfizierenden Hautpartien eine ausreichende Zeit der Einwirkung des Desinfektionsmittels ausgesetzt. Bei der Händedesinfektion kann dies in der Form geschehen, daß die Hände 2 1/2 bis 5 Minuten lang durch Einreiben mit einer ausreichenden Menge der

# 0 016 319

Lösung feucht gehalten werden.

Die nachfolgenden Beispiele sollen die Erfindung erläutern, sie jedoch nicht darauf beschränken.

Beispiel 1

Es wurde ein Desinfektionsmittel folgender Zusammensetzung (in Gewichtsteilen) hergestellt :

46 Ethanol (96 Gewichtsprozent)
27 Isopropanol (100 Gewichtsprozent)
 1 Wasserstoffperoxid (30 Gewichtsprozent)
26 Wasser

Zur Prüfung der sporiciden Wirkung wurde das erfindungsgemäße Mittel mit einem wasserstoffperoxidfreien Desinfektionsmittel der Zusammensetzung (in Gewichtsteilen)

46 Ethanol (96 Gewichtsprozent)
27 Isopropanol (100 Gewichtsprozent)
27 Wasser

verglichen.

PVC-Flaschen mit 300 ml Inhalt wurden mit diesen Lösungen gefüllt. Die Proben wurden mit Sporensuspensionen der nachfolgenden Keime in den angegebenen Konzentrationen geimpft.

| 1) Bacillus cereus | $4 \times 10^3$/ml |
| 2) Bacillus subtilis | $6 \times 10^3$/ml |
| 3) Bacillus mesentericus | $15 \times 10^3$/ml |
| 4) Clostridium spec. | $5 \times 10^3$/ml |

Die Impfmenge betrug jeweils 1 ml. Mit jeder Keimart wurden jeweils 10 Proben des erfindungsgemäßen Desinfektionsmittel und 10 Proben der Vergleichszusammensetzung beimpft.

Die geimpften Lösungen wurden bei 20 °C aufbewahrt. 24 Stunden, 3 Tage und 7 Tage nach der Impfung wurden aus jeder Flasche jeweils 100 ml Flüssigkeit entnommen und durch ein Membranfilter mit 0,45 u Porendurchmesser filtriert. Bei Bacillus cereus, Bacillus subtilis und Bacillus mesentericus wurden die Filter auf Bouillongagar aufgelegt und bei 37 °C bebrütet. Bei Clostridium spec. wurden die Filter in ein Anaerobienmedium (wässrige Lösung von 1,5 Gewichtsprozent Agar, 1,0 Gewichtsprozent Glukose und 0,1 Gewichtsprozent Cystein, pH 7,7 ; bei 120 °C im Autoklaven sterilisiert) eingelegt und ebenfalls bei 37 °C bebrütet. Die Auszählung erfolgte nach 24 Stunden ; Kontrollzählungen wurden nach 3 und 7 Tagen durchgeführt. Die Ergebnisse dieser Versuchsreihe sind in Tabelle I wiedergegeben.

Tabelle I

Zeitlicher Verlauf der Keimzahlreduktion in Gegenwart von Wasserstoffperoxid

| Keim-art | | Erfindungsgemäßes Desinfektionsmittel | | | Vergleichs-zusammensetzung | | |
|---|---|---|---|---|---|---|---|
| | | 24 Std. | 3 Tage | 7 Tage | 24 Std. | 3 Tage | 7 Tage |
| Bac. cereus | 1 | 0 | 0 | 0 | 1 043 | 901 | 1 025 |
| | 2 | 0 | 0 | 0 | 941 | 1 434 | 1 324 |
| | 3 | 0 | 0 | 0 | 1 102 | 1 357 | 921 |
| | 4 | 0 | 0 | 0 | 1 094 | 1 481 | 1 264 |
| | 5 | 0 | 0 | 0 | 2 003 | 1 140 | 988 |
| | 6 | 0 | 0 | 0 | 1 280 | 1 540 | 1 211 |
| | 7 | 0 | 0 | 0 | 761 | 1 644 | 1 513 |
| | 8 | 0 | 0 | 0 | 1 449 | 1 231 | 1 120 |
| | 9 | 0 | 0 | 0 | 1 505 | 1 174 | 1 184 |
| | 10 | 0 | 0 | 0 | 1 123 | 1 083 | 1 334 |
| Bac. sub-tilis | 1 | 714 | 0 | 0 | 2 410 | 2 112 | 2 336 |
| | 2 | 411 | 0 | 0 | 1 840 | 2 452 | 2 170 |
| | 3 | 944 | 0 | 0 | 1 624 | 1 975 | 2 594 |
| | 4 | 602 | 0 | 0 | 2 264 | 1 784 | 1 927 |

### Tabelle I (Fortsetzung)
### Zeitlicher Verlauf der Keimzahlreduktion in Gegenwart von Wasserstoffperoxid

| Keim-art | | Erfindungsgemäßes Desinfektionsmittel | | | Vergleichs-zusammensetzung | | |
|---|---|---|---|---|---|---|---|
| | | 24 Std. | 3 Tage | 7 Tage | 24 Std. | 3 Tage | 7 Tage |
| | 5 | 195 | 0 | 0 | 1 998 | 2 488 | 1 964 |
| | 6 | 195 | 0 | 0 | 2 112 | 2 143 | 1 957 |
| | 7 | 478 | 0 | 0 | 2 334 | 1 857 | 2 163 |
| | 8 | 733 | 0 | 0 | 1 890 | 2 611 | 2 075 |
| | 9 | 518 | 0 | 0 | 2 040 | 2 344 | 1 920 |
| | 10 | 754 | 0 | 0 | 2 475 | 2 206 | 1 870 |
| Bac. mesente-ricus | 1 | 216 | 0 | 0 | 8 200 | 6 240 | 5 460 |
| | 2 | 15 | 0 | 0 | 5 400 | 7 180 | 6 380 |
| | 3 | 84 | 0 | 0 | 6 360 | 7 240 | 5 680 |
| | 4 | 24 | 0 | 0 | 5 600 | 7 890 | 6 800 |
| | 5 | 112 | 0 | 0 | 4 840 | 8 400 | 5 210 |
| | 6 | 7 | 0 | 0 | 6 200 | 7 140 | 4 890 |
| | 7 | 93 | 0 | 0 | 6 460 | 7 380 | 6 420 |
| | 8 | 18 | 0 | 0 | 8 120 | 6 430 | 6 690 |
| | 9 | 44 | 0 | 0 | 5 280 | 7 480 | 6 870 |
| | 10 | 69 | 0 | 0 | 5 840 | 7 820 | 6 450 |
| Clostri-dium spec. | 1 | 213 | 15 | 0 | 1 240 | 1 314 | 1 212 |
| | 2 | 194 | 7 | 0 | 1 412 | 1 283 | 1 184 |
| | 3 | 574 | 21 | 0 | 1 334 | 1 191 | 1 057 |
| | 4 | 432 | 4 | 0 | 1 219 | 1 213 | 1 094 |
| | 5 | 287 | 0 | 0 | 1 081 | 1 411 | 1 113 |
| | 6 | 912 | 7 | 0 | 1 112 | 1 034 | 1 049 |
| | 7 | 412 | 7 | 0 | 1 254 | 957 | 1 212 |
| | 8 | 247 | 0 | 0 | 1 012 | 1 246 | 912 |
| | 9 | 214 | 21 | 0 | 1 018 | 1 230 | 894 |
| | 10 | 457 | 54 | 0 | 1 430 | 1 177 | 1 044 |

### Beispiel 2

In PVC-Flaschen mit 300 ml Inhalt abgefüllte Proben des in Beispiel 1 beschriebenen erfindungsgemäßen Desinfektionsmittels wurden bei 0 °C, 20 °C und 40 °C 12 Monate lang aufbewahrt. Nach den in der ersten Spalte der Tabelle II angegebenen Lagezeiten wurden jeweils Proben entnommen, in denen der Wasserstoffperoxidgehalt nach Zugabe einer schwefelsauren Titan(IV)-chloridlösung mit einem ELKO II-Spektralphotometer bestimmt wurde. Die Ergebnisse der Lagerversuche sind in Tabelle II wiedergegeben.

### Tabelle II
### Wasserstoffperoxidgehalt in Abhängigkeit von der Lagerzeit

| Temperatur | 0 °C | 20 °C | 40 °C |
|---|---|---|---|
| Lagerzeit | Gew.-% $H_2O_2$ | Gew.-% $H_2O_2$ | Gew.-% $H_2O_2$ |
| — | 0,33 | 0,33 | 0,33 |
| 2 Tage | 0,33 | 0,32 | 0,34 |
| 4 Tage | 0,33 | 0,33 | 0,33 |
| 9 Tage | 0,34 | 0,33 | 0,33 |
| 1 Monat | 0,32 | 0,33 | 0,32 |

**0 016 319**

Tabelle II (Fortsetzung)

Wasserstoffperoxidgehalt in Abhängigkeit von der Lagerzeit

| Temperatur | 0 °C | 20 °C | 40 °C |
|---|---|---|---|
| Lagerzeit | Gew.-% $H_2O_2$ | Gew.-% $H_2O_2$ | Gew.-% $H_2O_2$ |
| 3 Monate | 0,32 | 0,32 | 0,32 |
| 6 Monate | 0,34 | 0,33 | 0,33 |
| 12 Monate | 0,35 | 0,32 | 0,35 |

Beispiel 3

Durch Herstellen einer Lösung folgender Zusammensetzung (in Gewichtsteilen).

```
46    Ethanol (96 Gewichtsprozent)
27    Isopropanol (100 Gewichtsprozent)
 1    Wasserstoffperoxid (30 Gewichtsprozent)
 0,5  2,4,4'-Trichlor-2'-hydroxydiphenylether
25,5  Wasser
```

wurde ein Desinfektionsmittel erhalten, das speziell für die Händedesinfektion vor dem Arbeiten mit Operationshandschuhen geeignet ist.

**Ansprüche**

1. Desinfektionsmittel auf Basis von Ethanol, n-Propanol und/oder Isopropanol, gekennzeichnet durch einen Gehalt von 0,05 bis 1, insbesondere 0,1 bis 0,4 Gew.-%, bezogen auf das gesamte Desinfektionsmittel, an Wasserstoffperoxid, berechnet als wasserfreie Substanz.

2. Desinfektionsmittel nach Anspruch 1, gekennzeichnet durch die Zusammensetzung

```
40    - 50  Gew.-% Ethanol
20    - 30  Gew.-% Isopropanol
 0,15 -  0,2 Gew.-% Wasserstoffperox
Rest   Wasser
```

3. Desinfektionsmittel nach den Ansprüchen 1 und 2, gekennzeichnet durch einen Gehalt von 0,5 bis 1,5 Gewichtsprozent, bezogen auf das gesamte Desinfektionsmittel, an 2,4,4'-Trichlor-2'-hydroxydiphenylether oder 1,1'-Hexamethylenbis-[5-(4-chlorphenyl)-biguanid]-glukonat.

4. Verwendung des Desinfektionsmittels nach den Ansprüchen 1 bis 3 zur Haut- und Händedesinfektion.

**Claims**

1. A disinfectant based on ethanol, n-propanol and/or isopropanol, characterised by a content of from 0.05 to 1 % by weight and more particularly of from 0.1 to 0.4 % by weight, based on the disinfectant as a whole, of hydrogen peroxide, expressed as anhydrous substance.

2. A disinfectant as claimed in Claim 1, characterised by the following composition :

```
40    to 50  % by weight of ethanol
20    to 30  % by weight of isopropanol
 0.15 to  0.2 % by weight of hydrogen peroxide
remainder     water.
```

3. A disinfectant as claimed in Claims 1 and 2, characterised by a content of from 0.5 to 1.5 % by weight, based on the disinfectant as a whole, of 2,4,4'-trichloro-2'-hydroxydiphenyl ether or 1,1'-hexamethylene-bis-[5-(4-chlorphenyl)-biguanide]-gluconate.

4. The use of the disinfectant claimed in Claims 1 to 3 for disinfecting the skin and the hands.

5

**0 016 319**

**Revendications**

1. Produit désinfectant à base d'éthanol, de n-propanol et/ou d'isopropanol, caractérisé en ce qu'il contient de 0,05 à 1, plus spécialement de 0,1 à 0,4 % en poids, par rapport au poids du produit désinfectant total, de peroxyde d'hydrogène, exprimé en substance anhydre.

2. Produit désinfectant selon la revendication 1, caractérisé en ce qu'il se compose de :

40 à 50 % en poids d'éthanol
20 à 30 % en poids d'isopropanol
0,15 à 0,2 % en poids de peroxyde d'hydrogène
solde : eau.

3. Produit désinfectant selon les revendications 1 et 2, caractérisé en ce qu'il contient de 0,5 à 1,5 % en poids, par rapport au produit désinfectant total, d'éther 2,4,4'-trichloro-2'-hydroxydiphénylique ou de bis-[5-(4-chlorophényl)-biguanide]-gluconate de 1,1'-hexaméthylène.

4. Utilisation du produit désinfectant selon les revendications 1 à 3 pour la désinfection de la peau et des mains.